# EUROPEAN PATENT SPECIFICATION

(11) **EP 3 473 873 B1**
(45) Date of publication and mention of the grant of the patent: **30.12.2020**
(21) Application number: 17275168.7
(22) Date of filing: 20.10.2017
(51) Int. Cl.: F16B 39/04, F16B 39/12

(54) **THREADED COUPLINGS WITH LOCKING**
GEWINDEVERBINDUNGEN MIT VERRIEGELUNG
ACCOUPLEMENTS FILETÉS AVEC VERROUILLAGE

(43) Date of publication of application: 24.04.2019
(73) Proprietor: Crompton Technology Group Limited, Solihul, West Midlands B90 4SS (GB)
(72) Inventor: FAULKNER, Dale, Stourbridge, West Midlands DY9 8AH (GB)
(74) Representative: Dehns

(56) References cited:
- CN-A- 103 644 189
- US-A- 2 821 419
- US-A- 2 956 604

## Description

### Technical Field

The present disclosure relates to threaded couplings, particularly threaded couplings comprising a locking assembly.

### Background

Threaded couplings, comprising an externally threaded member and an internally threaded member, which are threadedly engagable, are often used at joints within mechanical systems to provide for rotational and length adjustment of the joint. This may be useful, for example, where final assembly of the system takes place at a different location to the production of the component parts. The length and angular position of the joint can be adjusted by rotating the members relative to one another. In some mechanical systems, the setting of the relative angular position of the members is referred to as timing.

At least in the aerospace industry, a locking assembly is typically provided for the threaded coupling, which prevents further rotation (and therefore changes in length) once the correct angle and length has been achieved. It is required in many scenarios to prevent the threaded coupling from rotating further (and therefore changing its length) once the correct angle and length have been achieved. This is referred to as locking, and is typically achieved using a lock washer and a keyway cut into the externally threaded member. The lock washer features a key which projects radially inwards to engage with the keyway, along with a radial rib that engages with the internally threaded member. A lock nut then secures the washer in place such that it cannot be disengaged, ensuring that the relative position of the two threaded members is fixed. An example of such a locking assembly is seen in US 4,423,992. US 2,821,419 A discloses a rod-end locking arrangement that uses a lock member disposed in a keyway of a piston rod, along with a nut and a wire element to lock an interconnection between the piston rod and a clevis.

Typical locking assemblies as described above comprise bulky components, and in weight sensitive applications, such as in the aerospace industry, additional weight is highly undesirable. In addition, typical locking assemblies can considerably increase the length of a threaded coupling.

The present disclosure seeks to address these shortcomings by providing a threaded coupling comprising a secure locking assembly with reduced length and weight.

According to the present disclosure there is provided a threaded coupling according to claim 1.

Thus it will be seen by those skilled in the art that, in accordance with the disclosure, a threaded coupling is provided that requires less material and is more space efficient while still providing effective locking and timing. This results in weight and cost savings as well as enabling the coupling to be used in space limited locations.

A lock pin is distinguished from any other example of lock means, for example a lock washer, by its ability to be removed from the assembled threaded coupling without separating the first and second coupling members. Accordingly the lock pin preferably has an angular extent relative to the cylindrical portion of less than 180°. Further preferably the angular extent of the lock pin is less than 90°, for example 30°, 20° or less than 10°. This enables simpler assembly and repair.

As mentioned above, it is desirable to minimise the total length of the threaded coupling, and as such in preferable examples the at least one projection projects a projection distance in the axial direction, and the lock pin has a thickness in the axial direction when seated, that is less than or equal to the projection distance. Further preferably the lock pin has a thickness in the axial direction when seated, which is equal to the projection distance. This ensures that the lock pin cannot, when seated, move in the axial direction.

The projection distance may be minimised to further reduce the length, although locking torque requirements may define a minimum acceptable projection distance, in that the threaded coupling must remain locked when the first and second coupling members experience a prescribed relative torque. The projection distance is preferably chosen to be the smallest distance that provides the prescribed torque resistance.

In locking assemblies for threaded couplings typical of the prior art, it is only possible to adjust the length of the threaded coupling by rotating the coupling members relative to each other by whole (360°) turns, which for some thread pitches can correspond to a considerable length adjustment. Accordingly, in some examples the first coupling member comprises a plurality of projections, e.g. six or eight, positioned around the rim to form a plurality of gaps between them. In such examples the lock pin may be arranged to be seated at least partially in at least one of these gaps, and in contact with at least one of the projections. This enables the timing of the threaded coupling to be adjusted by angles less than a whole turn and allows the same threaded coupling to be utilised in a variety of different applications that require different timing. In a subset of these examples the lock pin is arranged to be seated in contact with at least two projections. Preferably the plurality of projections are equally sized. In some examples the plurality of projections are equiangularly spaced around the rim of the cylindrical portion, although other spacing patterns are possible.

The lock pin comprises a slot to accommodate the at least one projection such that when seated, the slot encloses the at least one projection, wherein the first engagement surface comprises the internal surface of the slot, and the second engagement surface comprises the external surface of the at least one projection. This prevents outward radial movement of the lock pin. Preferably, the projections have a circular cross sectional profile, although other cross sectional profiles are possible, such as square or elliptical.

In some examples the lock pin comprises a main part, comprising a longitudinally extending through-hole, and a separate securing part arranged to extend at least partially into the longitudinally extending through-hole, and the rim comprises a longitudinally extending cavity, wherein the main part is arranged to be seated in contact with the at least one projection and extend into the at least one key cavity, and the securing part is also arranged to extend at least partially into the longitudinally extending cavity. The securing part may take the form of a pin or dowel, for example. In such examples the securing part comprises the first engagement surface, and the longitudinally extending cavity comprises the second engagement surface. It will be understood that in these examples the main part and the securing part are separable, i.e. a two-part lock pin.

The key cavity may comprise a single radially inwards-extending hole suitable for receiving the lock pin. In some examples the key cavity comprises a keyway extending at least partially along the externally threaded portion. Additionally or alternatively the key cavity comprises a plurality of keyways or cavities, which may be positioned colinearly or may be angularly offset around the externally threaded portion. The provision of multiple locations in which the lock pin can be seated increases the configurability of the threaded coupling in terms of timing and length adjustment.

In some examples the lock nut comprises an annular groove, which comprises the second engagement surface, and the lock pin comprises a protrusion which, when the lock pin is seated, is positioned within the annular groove and comprises the first engagement surface.

Additionally or alternatively the second engagement portion may comprise an annular groove in the first coupling member. In some examples the lock pin comprises a protrusion which, when the lock pin is seated, is positioned within the annular groove and comprises the first engagement surface.

In some examples where the rim comprises a plurality of projections, at least one of the gaps is tapered, e.g. it is narrower on the radially outward side and wider on the radially inward side. In such examples the lock pin is similarly tapered to fit in the at least one gap, wherein the first engagement surface comprises one side of the lock pin and the second engagement surface comprises a side of one of the plurality of projections. In these examples the lock pin does not require an additional protrusion, and the lock nut does not require an additional annular groove. This decreases the manufacturing complexity and cost of the threaded coupling.

In many applications of threaded couplings, so called secondary locking is required, wherein the lock nut itself must be secured via secondary locking means such that it does not unscrew when subject to, for example, vibrations during use. Accordingly, in some examples the lock nut comprises at least a first through-hole through which lock wire may be threaded; the first coupling member, the second coupling member or the lock pin comprises a second through-hole for lock wire and a lock wire is arranged to be inserted, in use, through the first and second through-holes and secured e.g. such that relative movement of the lock nut and any of the other components of the threaded coupling is not possible. In preferable examples the second through-hole is provided on the lock pin. Further preferably the position of the first and second through-holes is such that a minimum length of lock wire is required.

The threaded coupling described herein is particularly suited for use when connected to a structural component made of fibre reinforced polymer matrix composite material, for example a carbon fibre reinforced polymer (CFRP) rod. As such, in some examples the first coupling member comprises connection means for connecting the first coupling member to a structural component made of fibre reinforced polymer matrix composite material. Preferably the connection means comprises a threaded portion, and the first coupling member is arranged to be screwed onto the end of the structural component. In these examples the at least one projection may serve as a torque application point for screwing the first coupling member onto the structural component. Preferably the at least one projection is shaped so as to receive a standard torque application tool.

The second coupling member may comprise a rod end, a clevis, a blade end, a bush housing or any other suitable component that may require precise timing.

### Detailed Description

One or more non-limiting examples will now be described, by way of example only, and with reference to the accompanying figures, in which:
Figure 1 is an exploded view of a threaded coupling according to a first example of the present disclosure;
Figure 2 is a cross sectional view of the threaded coupling according to the first example of the present disclosure;
Figure 3 is a second cross sectional view of the threaded coupling according to the first example of the present disclosure;
Figure 4 is a cross sectional view of a threaded coupling according to an example of the present disclosure;
Figure 5 is an exploded view of a threaded coupling according to a second example of the present disclosure;
Figure 6 is a cross sectional view of the threaded coupling according to the second example of the present disclosure;
Figure 7 is a second cross sectional view of the threaded coupling according to the second example of the present disclosure;
Figure 8a is a cross sectional view of a lock pin according to an example of the present disclosure;
Figure 8b is a cross sectional view of a lock pin according to an example of the present invention;
Figures 9 and 10 are cross sectional views of lock pins according to one or more further examples of the present disclosure;
Figures 11 and 12 are cross sectional views of lock pin protrusion profiles according to one or more examples of the present disclosure; and
Figure 13 illustrates a fully assembled threaded coupling according to one or more examples of the present disclosure.

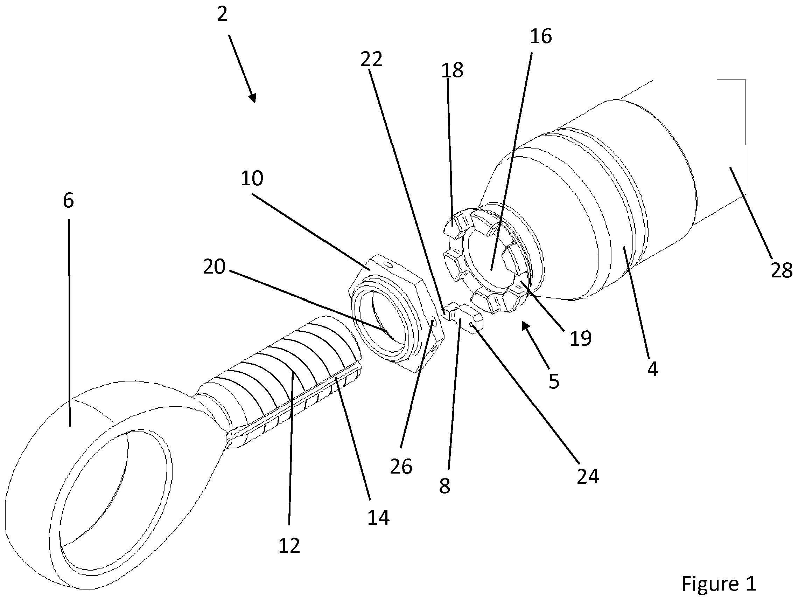

Figure 1 shows a threaded coupling 2 comprising an end fitting 4, a rod end 6, a lock pin 8 and a lock nut 10. The rod end 6 comprises a cylindrical externally threaded portion 12 and a key cavity in the form of a keyway 14, which comprises a groove cut along the externally threaded portion 12. The end fitting 4 comprises a cylindrical internally threaded portion 16 that is threadedly engageable with the externally threaded portion 12.

The end fitting 4 further comprises an annular rim 5 that defines a circular opening through which the externally threaded portion 12 may be inserted to engage with the internally threaded portion 16. The rim 5 comprises a plurality of projections 18 which project in an axial direction parallel to the axis of rotational symmetry of the cylindrical internally threaded portion 16.

In this example the projections 18 are equally sized and evenly spaced around the rim 5 to define a plurality of equally sized gaps 19 between adjacent projections 18. When assembled, the rod end 6 is coupled to the end fitting 4 through the threadedly engaged internally threaded portion 16 and the externally threaded portion 12. The length of the threaded coupling 2 and the orientation of the rod end 6 with respect to the end fitting 4, also referred to as the timing of the threaded coupling, can be adjusted by rotating the rod end 6 relative to the end fitting 4.

The lock pin 8 is shaped such that it may be seated in one of the gaps 19 between adjacent projections 18, while extending radially (relative to the cylindrical internally threaded portion 16) both inwards past the minimum radial extent of the rim 5 and outwards past the maximum radial extent of the rim 5. When the threaded coupling is assembled, the rod end 6 is orientated relative to the end fitting 4 such that the keyway 14 is aligned with a gap 19, and the lock pin 8 is disposed in this gap 19 as described above such that it extends radially inwards into the keyway 14. When seated in said gap 19 the lock pin 8 is restricted from moving circumferentially by the sides of the projections 18 that define the gap 19.

The keyway 14 has a depth, and the lock pin 8, when seated, extends past the minimum radial extent of the rim 5 by a distance equal to this depth, such that when seated with the rod end 6 in place, the lock pin 8 is prevented from moving radially inwards.

The lock nut 10 comprises an internally threaded surface which is arranged to engage with the externally threaded portion 12 of the rod end 6. When the threaded assembly 2 is assembled, the lock nut 10 is tightened via the threaded engagement with the externally threaded portion 12, onto the rims of the end fitting 4. This restricts the axial movement of the lock pin 8, which is disposed in one of the gaps 19 between two of the projections 18 as detailed above.

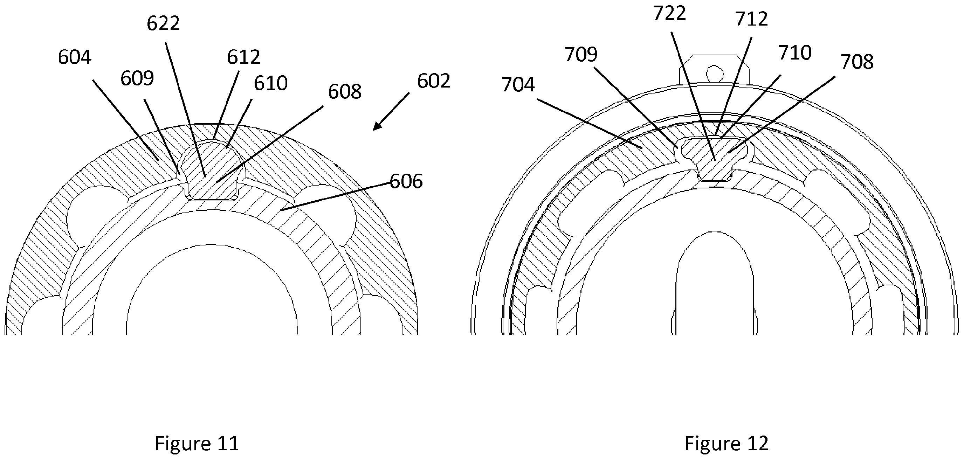

The lock nut 10 further comprises an annular groove 20 located on the end of the internally threaded surface nearest the end fitting 4. The lock pin 8 comprises an axially extending protrusion 22 arranged to sit in the annular groove 20 when the threaded coupling 2 is assembled. Engagement of the annular groove 20 and the protrusion 22 restricts outward radial movement of the lock pin 8. Some alternative profiles for the lock pin protrusion 22 are illustrated in Figures 11 and 12 and described in more detail below.

The disposal of the lock pin 8 within the keyway 14, and its aforementioned restriction on movement in the circumferential direction, prevents the relative rotation of the rod end 6 and the end fitting 4. This ensures that it is not possible to change the length of the threaded coupling 2 or adjust its timing while the lock pin 8 is seated. In other words the threaded coupling 2 is locked in position. The plurality of projections 18 define a plurality of gaps 19, and the lock pin 8 may be disposed within any of these gaps 19 to enable the timing and length of the threaded coupling 2 to be adjusted by fractions of a whole turn. In this example there are six projections 18 defining six gaps 19, with a 60° angular separation between them. This allows the timing of the threaded coupling 2 to be adjusted in steps of 60°.

For a typical thread angle of 60°, and a typical diameter of the threaded portions 12, 16 of 25.4 mm, the length of the threaded coupling 2 may be adjusted in steps of 2.12 mm. Of course other thread angles and diameters of the threaded portions 12, 16 are possible

To adjust the length or timing of the threaded coupling 2 once assembled, the lock nut 10 must be retracted from its position against the rim 5 a distance such that the lock pin 8 may be extracted. The minimum retraction distance for which extraction is possible is equal to the axial depth of the annular groove 20, which may be significantly less than the axial thickness of the projections 18.

The threaded coupling 2 described herein also provides for secondary locking, such that the lock nut 10 cannot, for example due to vibrations, become, during use, loosened a sufficient distance such that the lock pin 8 becomes disengaged and the threaded coupling 2 becomes unlocked. The provision of secondary locking is of particular use in, for example, the aerospace industry, where vibrations are common and it is vital that components do not become unsecured during use.

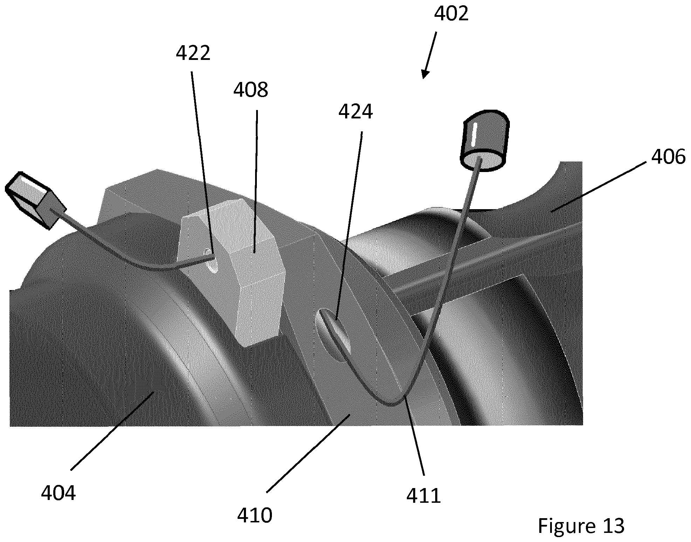

To provide this secondary locking, the lock pin 8 comprises a first through-hole 24, and the lock nut 10 comprises a second through-hole 26. Once the threaded coupling 2 has been assembled, a lock wire (not shown) is inserted through the first and second through-holes 24, 26, pulled taut and secured (e.g. using crimp ferrules). The lock nut 10 is therefore prevented from loosening, as any attempt to unwind the lock nut 10 pulls the lock wire in tension against the lock pin 8. A diagram of an assembled threaded coupling 2 with lock wire providing secondary locking is shown in Figure 13.

In the example of Fig. 1, the threaded coupling 2 is connected to a carbon fibre reinforced polymer (CFRP) rod 28, via the end fitting 4. An internally threaded connection portion at the opposite end of the end fitting 4 to the annular rim 5 (not shown) provides connection means to connect the end fitting 4 to the CFRP rod 28. During assembly, the end fitting 4 is threaded onto the CFRP rod 28 by applying a torque to the end fitting 4. Before the threaded coupling 2 is assembled, the projections 18 provide a torque application point with which any suitable torque application tool, e.g. a C spanner (not shown), may be used to drive the end fitting 4 onto the CFRP rod 28. The threaded coupling 2 therefore provides coupling with adjustable length and timing between the rod end 6 and the CFRP rod 28.

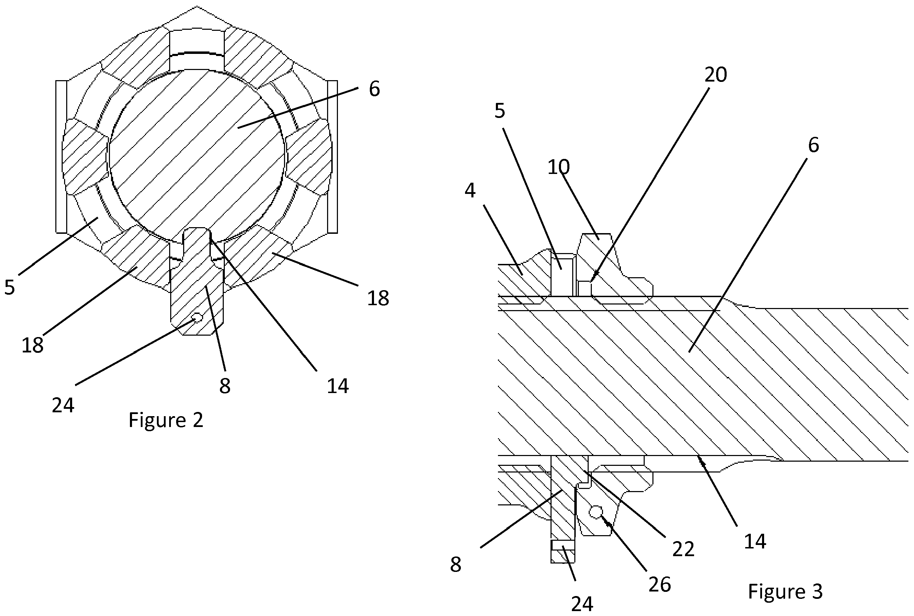

Figure 2 is a cross sectional view of the assembled threaded coupling 2 in a plane perpendicular to the axis of rotational symmetry of the cylindrical internally threaded portion 16, cutting through the rim 5 and lock pin 8. The lock pin 8 is seated between two projections 18 such that it extends into the keyway 14 of the rod end 6 and extends radially outwards from the rim 5. The first through-hole 24 is shown in the lock pin 8 at a point radially external to the rim 5.

The sides of the lock pin 8 are in contact with the sides of the projections 18 and are parallel, enabling radial insertion and extraction of the lock pin 8. The rod end 6 is prevented from rotating relative to the rim 5 due to the extension of the lock pin 8 into the keyway 14 and the lock pin 8 being in contact with the projections 18.

Figure 3 is a cross sectional view of the assembled threaded coupling 2 in a plane parallel to the axis of rotational symmetry of the cylindrical internally threaded portion 16, cutting through the centre of lock pin 8. The lock nut 10 is tightened against the rim 5 and the lock pin 8 to prevent axial movement of the lock pin 8 and the axially extending protrusion 22 extends into the annular groove 20 to prevent outward radial movement of the lock pin 8. The lock pin 8 extends the entire depth of the keyway 14, such that inward radial movement is prevent.

The first through-hole 24 and second through-hole 26 are positioned proximally, such that a minimum length of lock wire (not shown) may be used to provide secondary locking to the threaded coupling.

While in this example outward radial movement of the lock pin 8 is prevented through engagement of the protrusion 22 of the lock pin 8 and the annular groove 20 on the lock nut 10, in some alternative examples, outward radial movement of a lock pin may be prevented through engagement of a similar protrusion with an annular groove on the end fitting itself.

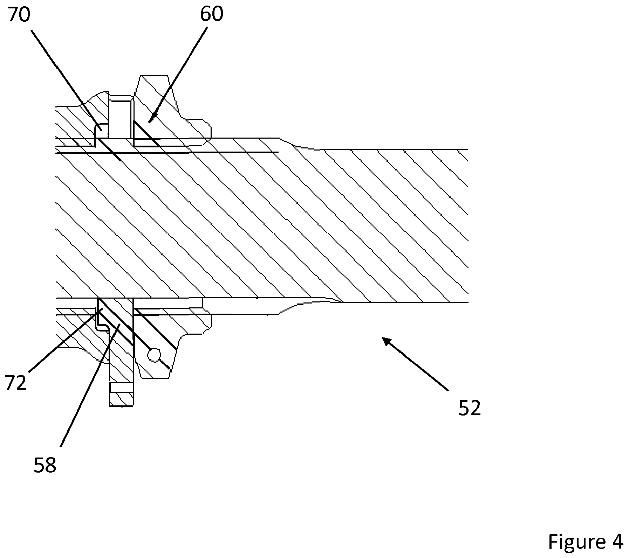

Figure 4 illustrates a cross sectional view of such an alternative assembled threaded coupling 52 which comprises an end fitting 54 in which an annular groove 70 is disposed. In a similar manner to the previous example, a lock pin 58 comprises an axially extending projection 72 that extends into the annular groove 70 to prevent outward radial movement of the lock pin 58. In this example a specially manufactured lock nut comprising an annular groove is not required and a standard lock nut 60 may be used instead to secure the assembly 52.

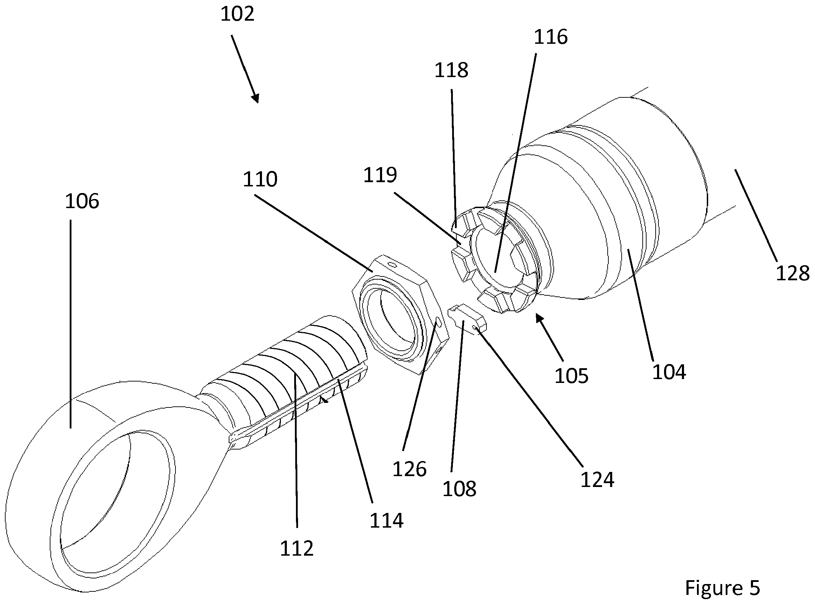

Figure 5 shows an alternative example of a threaded coupling 102 comprising an end fitting 104, a rod end 106, a lock pin 108 and a lock nut 110. The rod end 106 comprises a cylindrical externally threaded portion 112 and a keyway 114, which comprises a groove cut along the externally threaded portion 112. The end fitting 104 comprises a cylindrical internally threaded portion 116 that is threadedly engageable with the externally threaded portion 112.

The end fitting 104 further comprises an annular rim 105 that defines a circular opening through which the externally threaded portion 112 may be inserted to engage with the internally threaded portion 116. The rim 105 comprises a plurality of projections 118 which project in an axial direction parallel to the axis of rotational symmetry of the cylindrical internally threaded portion 116.

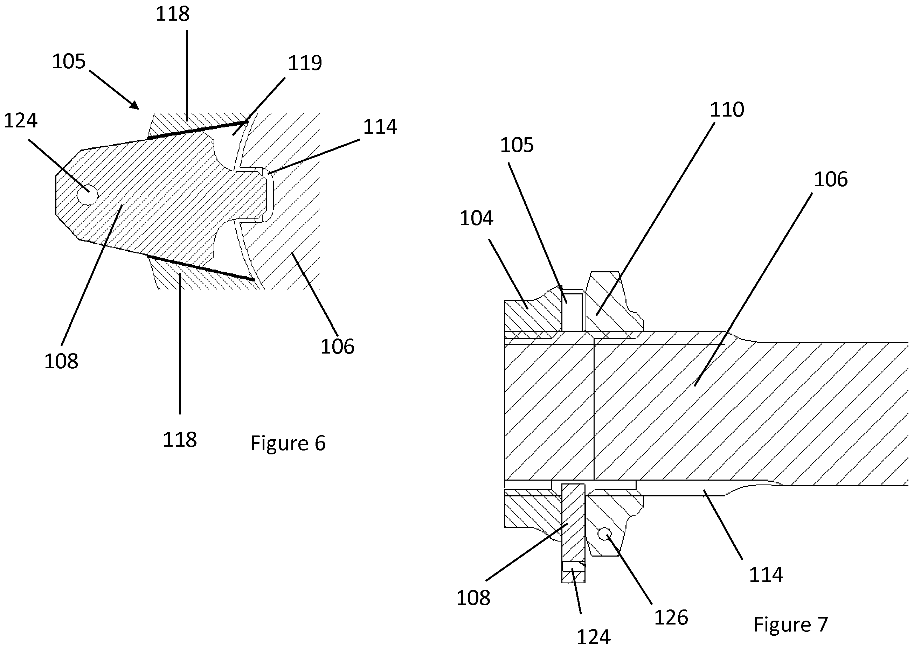

The projections 118 are equally sized and evenly spaced around the rim 105 to define a plurality of equally sized gaps 119 between adjacent projections 118. The projections 118 are tapered, such that the gaps 119 extend from a wider radially innermost opening to a narrower radially outermost opening (see also Figure 6). When assembled, the rod end 106 is coupled to the end fitting 104 through the threadedly engaged internally threaded portion 116 and the externally threaded portion 112. The length of the threaded coupling 102 and the orientation of the rod end 106 with respect to the end fitting 104, also referred to as the timing of the threaded coupling, can be adjusted by rotating the rod end 106 relative to the end fitting 104.

The lock pin 108 is shaped such that it may be seated in one of the tapered gaps 119 between adjacent projections 118, while extending radially (relative to the cylindrical internally threaded portion 116) both inwards past the minimum radial extent of the rim 105 and outwards past the maximum radial extent of the rim 105. When the threaded coupling 102 is assembled, the rod end 106 is orientated relative to the end fitting 104 such that the keyway 114 is aligned with a gap 119, and the lock pin 108 is disposed in this gap 119 as described above such it extends radially inwards into the keyway 114. When seated in said gap 119 the lock pin 108 is restricted from moving circumferentially by the sides of the projections 118 that define the gap 119. The lock pin 108 is tapered to match the tapered shape of the gaps 119, such that when seated, it is restricted from moving radially outwards.

The keyway 114 has a depth, and the lock pin 108, when seated, extends past the minimum radial extent of the rim 105 by a distance equal to this depth, such that when seated with the rod end 106 in place, the lock pin 108 is prevented from moving radially inwards.

The lock nut 110 comprises an internally threaded surface which engages with the externally threaded portion 112 of the rod end 106. When the threaded assembly 102 is assembled, the lock nut 110 is tightened via the threaded engagement with the externally threaded portion 112, onto the rim 105 of the end fitting 104. This restricts the axial movement of the lock pin 108, which is disposed in the gap 119 between two of the projections 118 as detailed above.

In contrast to the example illustrated by Figures 1-3, the lock nut 110 does not require an annular groove, and the lock pin 108 does not require an additional protrusion, as the radial retention of the lock pin 108 is provided via the tapering nature of the gaps between adjacent projections 118. This reduces the manufacturing complexity of the lock nut 110 and the lock pin 108.

The lock pin 108 locks the threaded coupling 102 in the same way as described with relation to Figure 1. As for the example illustrated in Figure 1, the timing of the threaded coupling 102 may be adjusted in steps of 60° and for a typical thread angle of 60°, and a typical diameter of the threaded portions 112, 116 of 25.4 mm, the length of the threaded coupling 102 may be adjusted in steps of 2.12 mm. Of course other thread angles and diameters of the threaded portions 112, 116 are possible.

To adjust the length or timing of the threaded coupling 102 once assembled, the lock nut 110 must be retracted from its position against the rim 105 a distance such that the lock pin 108 may be extracted. The minimum retraction distance for which extraction is possible is equal to the axial thickness of the lock pin 108, because due to the tapering nature of the lock pin 108 and the gaps 119 between adjacent projections 118, the lock pin 108 cannot be extracted radially from the gap 119 in which it is seated. Instead, it must be lifted axially out of the gap 119, requiring a space above the rim 105 equal to its axial thickness.

The lock pin 108 comprises a first through-hole 124 and the lock nut 110 comprises a second through-hole 126, to provide for secondary locking via a lock wire (not shown), as described for the first example.

Similarly to in the first example, the threaded coupling 102 is connected to a carbon fibre reinforced polymer (CFRP) rod 128, via an internally threaded connection portion of the end fitting 104. As in the first example, the projections 118 provide a torque application point with which any suitable torque application tool, e.g. a C spanner (not shown), may be used to drive the end fitting 104 onto the CFRP rod 128. The threaded coupling 102 therefore provides coupling with adjustable length and timing between the rod end 106 and the CFRP rod 128.

Figure 6 is a close up cross-sectional view of the assembled threaded coupling 102 in a plane perpendicular to the axis of rotational symmetry of the cylindrical internally threaded portion 116, cutting through the rim 105 and lock pin 108. The lock pin 108 is seated between two projections 118 such that it extends into the keyway 114 of the rod end 16 and extends radially outwards from the rim 105. The first through-hole 124 is shown in the lock pin 108 at a point radially external to the rim 105.

The tapering nature of the sides of the projections 118 is seen clearly in Figure 6. The sides of the lock pin 108 are in contact with the sides of both of the projections 118, preventing any outward radial movement of the lock pin 108. The rod end 106 is prevented from rotating relative to the rim 105 due to, similarly to the first example, the extension of the lock pin 108 into the keyway 114 and the lock pin 108 being in contact with the projections 118.

Figure 7 is a cross sectional view of the assembled threaded coupling 102 in a plane parallel to the axis of rotational symmetry of the cylindrical internally threaded portion 116, cutting through the centre of lock pin 108. The lock nut 110 is tightened against the rim 105 and the lock pin 108 to prevent axial movement of the lock pin 108.

As in the first example, the first through-hole 124 and second through-hole 126 are positioned proximally, such that a minimum length of lock wire (not shown) may be used to provide secondary locking to the threaded coupling.

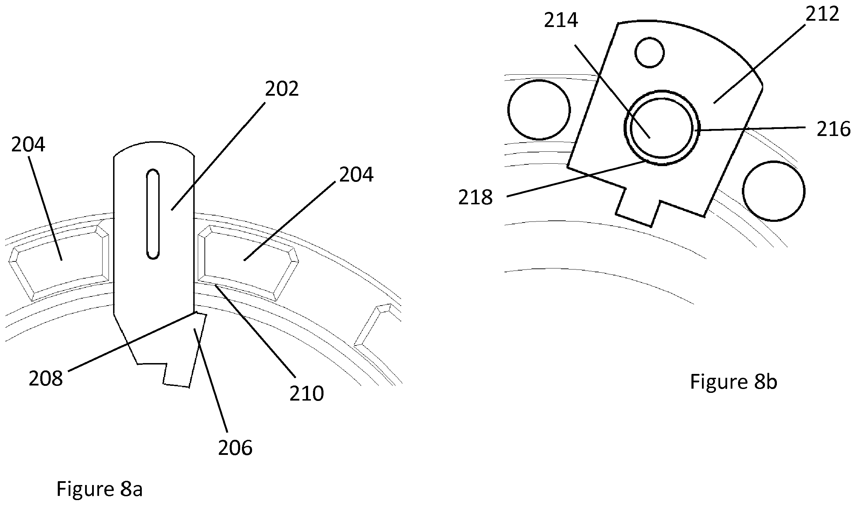

Figure 8a is a cross sectional view of a lock pin 202 seated between two projections 204. The lock pin 202 comprises two parallel sides along with a circumferentially extending lip 206. The lip 206 is located radially inwards of the projections 204 and comprises an engagement surface 208 which engages with a radially inner side of one of the projections 210 to prevent radially outward movement of the lock pin 202.

Figure 8b is a cross-sectional view of a lock pin according to the present invention. The lock pin 212 comprises a circular slot 216 that encloses a circular projection 214. The slot 216 comprises an inner surface 218 that engages with an exterior surface of the projection 214 and prevents radial or circumferential movement of the lock pin 212.

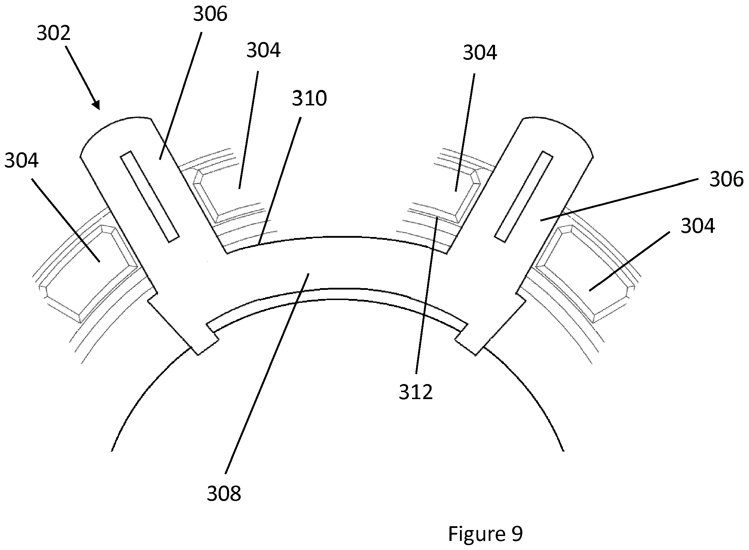

Figure 9 is a cross-sectional view of another lock pin 302 seated in contact with two pairs of projections 304 that each define a radially extending gap. The lock pin 302 comprises two radial portions 306 along with a circumferential portion 308 that connects the two radial portions 306. The circumferential portion 308 is located radially inwards of the projections 304 and comprises an outer engagement surface 310 which engages with a radially inner engagement surface 312 of two of the projections 304 to prevent radial movement of the lock pin 302.

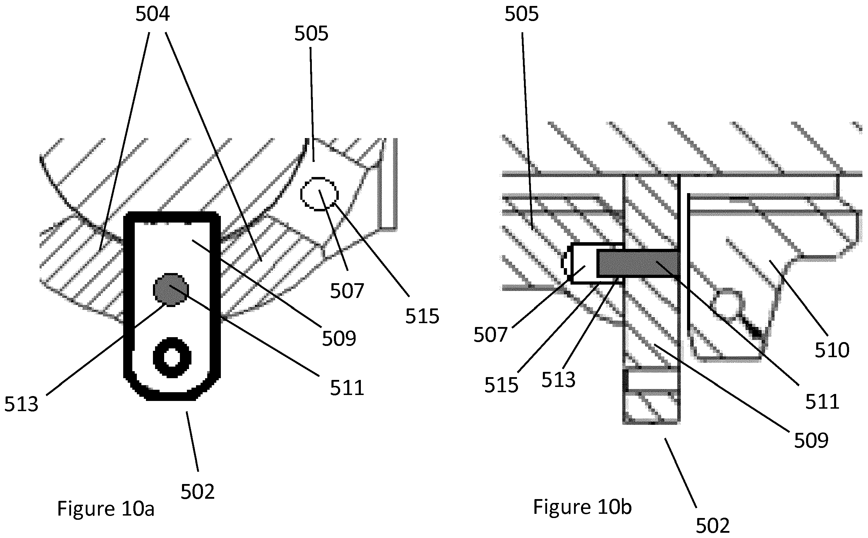

An alternative lock pin 502 seated between two projections 504 of a rim 505 of an end fitting is illustrated in Figures 10a and 10b. The lock pin 502 comprises a main part 509 and a securing part 511. The securing part 511 comprises a cylindrical dowel that extends into both a through-hole in the main part 509 and a cavity 507 formed in the rim 505. The securing part 511 is held in place by a lock nut 510, which is tightened against the rim 505 to prevent axial movement of the main part 509 and the securing part 511. The securing part 511 comprises a first engagement surface 513 and the cavity 507 comprises a second engagement surface 515. Outwards radial movement of the lock pin 502 is prevented by the engagement of the first and second engagement surfaces 513, 515.

Figure 11 is a cross sectional view of an assembled threaded coupling 602 comprising an end fitting 604, a rod end 606, a lock pin 608 and a lock nut (not shown). The cross sectional view shows an alternative profile of a protrusion 622 of the lock pin 608, disposed within a groove 609 provided in the end fitting 606. In a similar manner to the lock pin described with reference to Figures 1 - 3, the protrusion 622 serves to prevent outwards radial movement of the lock pin 608 by the engagement of an outer engagement surface 610 of the protrusion 622 and a radially inner engagement surface 612 of the groove 609.

Figure 12 shows a further alternative profile of a protrusion 722 of a lock pin 708, and a corresponding groove 709 within an end fitting 704. The protrusion 722 serves to prevent outwards radial movement of the lock pin 708 by the engagement of an outer engagement surface 710 of the protrusion 722 and a radially inner engagement surface 712 of the groove 709.

Figure 13 a close up view of an assembled threaded coupling 402 comprising an end fitting 404, a rod end 406, a lock pin 408, a lock nut 410 and a lock wire 411. The lock pin comprises a first through-hole 422 and the lock nut 410 comprises a second through-hole 424, into which the lock wire 411 is inserted to prevent relative movement of the lock nut 410 and lock pin 408. Note that while in this Figure the lock wire 411 is shown with a significant amount of slack, this is merely to aid the description of its configuration and in reality the lock wire 411 contains no additional length to ensure that no relative movement is possible..

## Claims

1. A threaded coupling (2, 402) comprising:
a first coupling member (4, 404), comprising a cylindrical portion (16) which is internally threaded around an axis of rotational symmetry of the cylindrical portion (16) and comprises an open end that defines an opening having an annular rim (5);
a second coupling member (6, 406) comprising an externally threaded portion (12) and at least one key cavity (14); and
a locking assembly comprising:
a lock pin (8, 212, 408); and
a lock nut (10, 410); wherein:
the externally threaded portion (12) is arranged to be received through the opening to be threadedly engaged with the internally threaded cylindrical portion (16) to couple the first coupling member (4, 404) to the second coupling member (6, 406);
the rim (5) comprises at least one projection (18, 214) that projects in a generally axial direction parallel to the axis of rotational symmetry of the cylindrical portion (16);
the lock pin (8, 212, 408) is arranged to, when the first coupling member (4, 404) is coupled to the second coupling member (6, 406), be seated in contact with the at least one projection (214) and extend into the at least one key cavity (14);
the lock nut (10, 410) is arranged to be threaded onto the second coupling member (6, 406) to restrict movement of the lock pin (8, 212, 408) in the axial direction; and
the lock pin (8, 212, 408) comprises a first engagement surface (218) which is arranged, when the lock pin (8, 212, 408) is seated, to engage a second engagement surface provided by the lock nut (10, 410) or the rim (5) so as to prevent movement of the lock pin (8, 212, 408) in a radial direction, perpendicular to the axial direction;
**characterised in that** the lock pin (8, 212, 408) comprises a slot (216) to accommodate the at least one projection (18, 214) such that when seated, the slot (216) encloses the at least one projection (18, 214), wherein the first engagement surface (218) comprises the internal surface (218) of the slot (216), and the second engagement surface comprises the external surface of the at least one projection (18, 214).

2. The threaded coupling (2, 402) of claim 1, wherein the first coupling member (4, 404) comprises a plurality of projections (18, 214), positioned around the rim (5) to form a plurality of gaps (19) between adjacent projections (18, 214) and the lock pin (8, 212, 408) is arranged to be seated at least partially in at least one of these gaps (19).

3. The threaded coupling (2, 402) of claim 2, wherein the lock pin (8, 212, 408) is arranged to be seated in contact with two projections (18, 214).

4. The threaded coupling (2, 402) of claim 2 or 3, wherein the plurality of projections (18, 214) are equally sized and equiangularly spaced around the rim (5) of the cylindrical portion (16).

5. The threaded coupling (2, 402) of any preceding claim, wherein the at least one projection (18, 214) projects a projection distance in the axial direction, and the lock pin (8, 212, 408) has a thickness in the axial direction when seated, that is less than or equal to the projection distance.

6. The threaded coupling (2, 402) of any preceding claim, wherein the key cavity (14) comprises a keyway (14) extending at least partially along the externally threaded portion (12).

7. The threaded coupling (2, 402) of any preceding claim, wherein the lock nut (10, 410) comprises an annular groove (20), which comprises the second engagement surface, and the lock pin (8, 408) comprises a protrusion (22) which, when the lock pin (8, 408) is seated, is positioned within the annular groove (20) and comprises the first engagement surface.

8. The threaded coupling (2, 52, 402) of any preceding claim, wherein the first coupling member (4, 54, 404) comprises an annular groove (70) which comprises the second engagement portion, and the lock pin (8, 58, 408) comprises a protrusion (72) which, when the lock pin (8, 58, 408) is seated, is positioned within the annular groove (70) and comprises the first engagement surface.

9. The threaded coupling (2, 102, 402) of any preceding claim, wherein at least one of the gaps (119) is tapered and the lock pin (8, 108, 408) is similarly tapered to fit in the at least one of the gaps (119), wherein the first engagement surface comprises one side of the lock pin (8, 108, 408) and the second engagement surface comprises a side of one of the plurality of projections (18, 118).

10. The threaded coupling (2, 402) of any preceding claim, wherein the lock nut (10, 410) comprises at least a first through-hole (26, 424) through which lock wire (411) may be threaded; the first coupling member (4, 404), the second coupling member (6, 406) or the lock pin (8, 212, 408) comprises a second through-hole (422) for lock wire (411) and a lock wire (411) is arranged to be inserted, in use, through the first and second through-holes (26, 424; 422) and secured.

11. The threaded coupling (2, 402) of any preceding claim, wherein the first coupling member (4, 404) comprises connection means for connecting the first coupling member (4, 404) to a structural component (28) made of fibre reinforced polymer matrix composite material.

12. The threaded coupling (2, 402) of claim 11, wherein the connection means comprises a threaded portion, and the first coupling member (4, 404) is arranged to be screwed onto an end of the structural component (28).

13. The threaded coupling (2, 402) of claim 12, wherein the at least one projection (18, 214) serves as a torque application point for screwing the first coupling member (4, 404) onto the structural component (28), and optionally the at least one projection (18, 214) is shaped so as to receive a standard torque application tool.

## Patentansprüche

1. Schraubkupplung (2, 402), umfassend:
ein erstes Kupplungselement (4, 404), das einen zylindrischen Abschnitt (16) umfasst, der mit einem Innengewinde um eine Rotationssymmetrieachse des zylindrischen Abschnitts (16) versehen ist und ein offenes Ende umfasst, das eine Öffnung definiert, die einen ringförmigen Kranz (5) aufweist;
ein zweites Kupplungselement (6, 406), das einen Abschnitt (12) mit Außengewinde und mindestens einen Keilhohlraum (14) umfasst; und
eine Sicherungsanordnung, umfassend:
einen Sicherungsstift (8, 212, 408); und
eine Sicherungsmutter (10, 410); wobei:
der Abschnitt (12) mit Außengewinde so ausgelegt ist, dass er durch die Öffnung aufgenommen werden kann, um mit dem zylindrisch Abschnitt (16) mit Innengewinde in Gewindeeingriff zu gelangen, so dass das erste Kupplungselement (4, 404) an das zweite Kupplungselement (6, 406) gekuppelt wird;
der Kranz (5) mindestens einen Vorsprung (18, 214) umfasst, der in einer im Allgemeinen axialen Richtung parallel zur Rotationssymmetrieachse des zylindrischen Abschnitts (16) vorragt;
der Sicherungsstift (8, 212, 408) so ausgelegt ist, dass er, wenn das erste Kupplungselement (4, 404) an das zweite Kupplungselement (6, 406) gekuppelt ist, in Kontakt mit dem mindestens einen Vorsprung (214) eingesetzt wird und sich in den mindestens einen Keilhohlraum (14) erstreckt;
die Sicherungsmutter (10, 410) so ausgelegt ist, dass sie auf das zweite Kupplungselement (6, 406) geschraubt wird, um eine Bewegung des Sicherungsstifts (8, 212, 408) in der axialen Richtung zu beschränken; und
der Sicherungsstift (8, 212, 408) eine erste Eingriffsfläche (218) umfasst, die so ausgelegt, dass sie, wenn der Sicherungsstift (8, 212, 408) eingesetzt ist, eine zweite Eingriffsfläche in Eingriff nimmt, die von der Sicherungsmutter (10, 410) oder dem Kranz (5) bereitgestellt wird, um eine Bewegung des Sicherungsstifts (8, 212, 408) in einer radialen Richtung, die senkrecht zur axialen Richtung ist, zu verhindern;
**dadurch gekennzeichnet, dass** der Sicherungsstift (8, 212, 408) einen Schlitz (216) umfasst, um den mindestens einen Vorsprung (18, 214) aufzunehmen, so dass, wenn er eingesetzt ist, der Schlitz (216) den mindestens einen Vorsprung (18, 214) umgibt, wobei die erste Eingriffsfläche (218) die Innenfläche (218) des Schlitzes (216) umfasst und die zweite Eingriffsfläche die Außenfläche des mindestens einen Vorsprungs (18, 214) umfasst.

2. Schraubkupplung (2, 402) nach Anspruch 1, wobei das erste Kupplungselement (4, 404) eine Vielzahl von Vorsprüngen (18, 214) umfasst, die so um den Kranz (5) angeordnet sind, dass sie eine Vielzahl von Lücken (19) zwischen angrenzenden Vorsprüngen (18, 214) bilden, und der Sicherungsstift (8, 212, 408) so ausgelegt ist, dass er mindestens teilweise in mindestens eine dieser Lücken (19) eingesetzt wird.

3. Schraubkupplung (2, 402) nach Anspruch 2, wobei der Sicherungsstift (8, 212, 408) so ausgelegt ist, dass er in Kontakt mit zwei Vorsprüngen (18, 214) eingesetzt wird.

4. Schraubkupplung (2, 402) nach Anspruch 2 oder 3, wobei die Vielzahl von Vorsprüngen (18, 214) gleich groß sind und gleichwinkelig um den Kranz (5) des zylindrischen Abschnitts (16) beabstandet sind.

5. Schraubkupplung (2, 402) nach einem der vorstehenden Ansprüche, wobei der mindestens eine Vorsprung (18, 214) um eine Vorsprungstrecke in der axialen Richtung vorragt und der Sicherungsstift (8, 212, 408) eine Dicke in der axialen Richtung aufweist, die, wenn er eingesetzt ist, kleiner oder gleich der Vorsprungstrecke ist.

6. Schraubkupplung (2, 402) nach einem der vorstehenden Ansprüche, wobei der Keilhohlraum (14) eine Keilnut (14) umfasst, die sich mindestens teilweise entlang des Abschnitts (12) mit Außengewinde erstreckt.

7. Schraubkupplung (2, 402) nach einem der vorstehenden Ansprüche, wobei die Sicherungsmutter (10, 410) eine ringförmige Nut (20) umfasst, die die zweite Eingriffsfläche umfasst, und der Sicherungsstift (8, 408) eine Vorwölbung (22) umfasst, die, wenn der Sicherungsstift (8, 408) eingesetzt ist, innerhalb der ringförmigen Nut (20) angeordnet ist und die erste Eingriffsfläche umfasst.

8. Schraubkupplung (2, 52, 402) nach einem der vorstehenden Ansprüche, wobei das erste Kupplungselement (4, 54, 404) eine ringförmige Nut (70) umfasst, die den zweiten Eingriffsabschnitt umfasst, und der Sicherungsstift (8, 58, 408) eine Vorwölbung (72) umfasst, die, wenn der Sicherungsstift (8, 58, 408) eingesetzt ist, innerhalb der ringförmigen Nut (70) angeordnet ist und die erste Eingriffsfläche umfasst.

9. Schraubkupplung (2, 102, 402) nach einem der vorstehenden Ansprüche, wobei mindestens eine der Lücken (119) konisch ist und der Sicherungsstift (8, 108, 408) ähnlich konisch ist, um in die mindestens eine der Lücken (119) zu passen, wobei die erste Eingriffsfläche eine Seite des Sicherungsstifts (8, 108, 408) umfasst und die zweite Eingriffsfläche eine Seite eines aus der Vielzahl von Vorsprüngen (18, 118) umfasst.

10. Schraubkupplung (2, 402) nach einem der vorstehenden Ansprüche, wobei die Sicherungsmutter (10, 410) mindestens ein erstes Durchgangsloch (26, 424) umfasst, durch die der Sicherungsdraht (411) durchgezogen werden kann; das erste Kupplungselement (4, 404), das zweite Kupplungselement (6, 406) oder der Sicherungsstift (8, 212, 408) ein zweites Durchgangsloch (422) für den Sicherungsdraht (411) umfasst und ein Sicherungsdraht (411) so ausgelegt ist, dass er im Betrieb durch das erste und das zweite Durchgangsloch (26, 424; 422) eingeführt wird und fixiert wird.

11. Schraubkupplung (2, 402) nach einem der vorstehenden Ansprüche, wobei das erste Kupplungselement (4, 404) ein Verbindungsmittel zum Verbinden des ersten Kupplungselements (4, 404) mit einem Strukturbauteil (28) umfasst, das aus faserverstärktem Polymermatrix-Verbundwerkstoffmaterial hergestellt ist.

12. Schraubkupplung (2, 402) nach Anspruch 11, wobei das Verbindungsmittel einen Schraubabschnitt umfasst und das erste Kupplungselement (4, 404) so ausgelegt ist, dass es auf ein Ende des Strukturbauteils (28) geschraubt wird.

13. Schraubkupplung (2, 402) nach Anspruch 12, wobei der mindestens eine Vorsprung (18, 214) als ein Punkt zum Aufbringen eines Drehmoments zum Schrauben des ersten Kupplungselements (4, 404) auf das Strukturbauteil (28) dient und optional der mindestens eine Vorsprung (18, 214) so geformt ist, dass er ein Standardwerkzeug zum Aufbringen eines Drehmoments aufnimmt.

## Revendications

1. Accouplement fileté (2, 402) comprenant :
un premier élément d'accouplement (4, 404), comprenant une partie cylindrique (16) qui est filetée intérieurement autour d'un axe de symétrie de rotation de la partie cylindrique (16) et qui comprend une extrémité ouverte qui définit une ouverture ayant un rebord annulaire (5) ;
un second élément d'accouplement (6, 406) comprenant une partie filetée extérieurement (12) et au moins une cavité de clavette (14) ; et
un ensemble de verrouillage comprenant :
une goupille de verrouillage (8, 212, 408) ; et
un contre-écrou (10, 410); dans lequel :
la partie filetée extérieurement (12) est agencée de manière à être reçue à travers l'ouverture pour être mise en prise par filetage avec la partie cylindrique filetée intérieurement (16) pour accoupler le premier élément d'accouplement (4, 404) avec le second élément d'accouplement (6, 406) ;
le rebord (5) comprend au moins une saillie (18, 214) qui fait saillie dans une direction généralement axiale parallèle à l'axe de symétrie de rotation de la partie cylindrique (16) ;
la goupille de verrouillage (8, 212, 408) est agencée de manière à, lorsque le premier élément d'accouplement (4, 404) est accouplé avec le second élément d'accouplement (6, 406), être placée en contact avec l'au moins une saillie (214) et s'étendre dans l'au moins une cavité de clavette (14) ;
le contre-écrou (10, 410) est agencé de manière à être fileté sur le second élément d'accouplement (6, 406) pour limiter le mouvement de la goupille de verrouillage (8, 212, 408) dans la direction axiale ; et
la goupille de verrouillage (8, 212, 408) comprend une première surface de mise en prise (218) qui est agencée, lorsque la goupille de verrouillage (8, 212, 408) est en place, de manière à venir en prise avec une seconde surface de mise en prise fournie par le contre-écrou (10, 410) ou le rebord (5) de manière à empêcher le mouvement de la goupille de verrouillage (8, 212, 408) dans une direction radiale, perpendiculaire à la direction axiale ;
**caractérisé en ce que** la goupille de verrouillage (8, 212, 408) comprend une fente (216) pour recevoir l'au moins une saillie (18, 214) de sorte que lorsque celle-ci est en place, la fente (216) renferme l'au moins une saillie (18, 214), dans lequel la première surface de mise en prise (218) comprend la surface interne (218) de la fente (216), et la seconde surface de mise en prise comprend la surface externe de l'au moins une saillie (18, 214).

2. Accouplement fileté (2, 402) selon la revendication 1, dans lequel le premier élément d'accouplement (4, 404) comprend une pluralité de saillies (18, 214), positionnées autour du rebord (5) pour former une pluralité d'interstices (19) entre des saillies adjacentes (18, 214), et la goupille de verrouillage (8, 212, 408) est agencée de manière à être placée au moins partiellement dans au moins l'un de ces interstices (19) .

3. Accouplement fileté (2, 402) selon la revendication 2, dans lequel la goupille de verrouillage (8, 212, 408) est agencée de manière à être placée en contact avec deux saillies (18, 214).

4. Accouplement fileté (2, 402) selon la revendication 2 ou 3, dans lequel la pluralité de saillies (18, 214) sont de même dimension et équiangulairement espacées autour du rebord (5) de la partie cylindrique (16).

5. Accouplement fileté (2, 402) selon une quelconque revendication précédente, dans lequel l'au moins une saillie (18, 214) fait saillie d'une distance de saillie dans la direction axiale, et la goupille de verrouillage (8, 212, 408) a une épaisseur dans la direction axiale lorsqu'elle est en place, qui est inférieure ou égale à la distance de saillie.

6. Accouplement fileté (2, 402) selon une quelconque revendication précédente, dans lequel la cavité de clavette (14) comprend une rainure de clavette (14) s'étendant au moins partiellement le long de la partie filetée extérieurement (12).

7. Accouplement fileté (2, 402) selon une quelconque revendication précédente, dans lequel le contre-écrou (10, 410) comprend une rainure annulaire (20), qui comprend la seconde surface de mise en prise, et la goupille de verrouillage (8, 408) comprend une saillie (22) qui, lorsque la goupille de verrouillage (8, 408) est en place, est positionnée à l'intérieur de la rainure annulaire (20) et comprend la première surface de mise en prise.

8. Accouplement fileté (2, 52, 402) selon une quelconque revendication précédente, dans lequel le premier élément d'accouplement (4, 54, 404) comprend une rainure annulaire (70), qui comprend la seconde surface de mise en prise, et la goupille de verrouillage (8, 58, 408) comprend une saillie (72) qui, lorsque la goupille de verrouillage (8, 58, 408) est en place, est positionnée à l'intérieur de la rainure annulaire (70) et comprend la première surface de mise en prise.

9. Accouplement fileté (2, 102, 402) selon une quelconque revendication précédente, dans lequel au moins l'un des interstices (119) est effilé et la goupille de verrouillage (8, 108, 408) est effilée de manière similaire pour s'adapter dans l'au moins un des interstices (119), dans lequel la première surface de mise en prise comprend un côté de la goupille de verrouillage (8, 108, 408) et la seconde surface de mise en prise comprend un côté de l'une de la pluralité de saillies (18, 118) .

10. Accouplement fileté (2, 402) selon une quelconque revendication précédente, dans lequel le contre-écrou (10, 410) comprend au moins un premier trou traversant (26, 424) à travers lequel le fil de verrouillage (411) peut être fileté ; le premier élément d'accouplement (4, 404), le second élément d'accouplement (6, 406) ou la goupille de verrouillage (8, 212, 408) comprennent un second trou traversant (422) pour le fil de verrouillage (411) et un fil de verrouillage (411) est agencé de manière à être inséré, lors de l'utilisation, à travers les premier et second trous traversants (26, 424 ; 422) et fixé.

11. Accouplement fileté (2, 402) selon une quelconque revendication précédente, dans lequel le premier élément d'accouplement (4, 404) comprend un moyen de connexion pour connecter le premier élément d'accouplement (4, 404) à un composant structurel (28) constitué d'un matériau composite à matrice polymère renforcée de fibres.

12. Accouplement fileté (2, 402) selon la revendication 11, dans lequel le moyen de connexion comprend une partie filetée, et le premier élément d'accouplement (4, 404) est agencé de manière à être vissé sur une extrémité du composant structurel (28) .

13. Accouplement fileté (2, 402) selon la revendication 12, dans lequel l'au moins une saillie (18, 214) sert de point d'application de couple pour visser le premier élément d'accouplement (4, 404) sur le composant structurel (28), et éventuellement l'au moins une saillie (18, 214) est façonnée de manière à recevoir un outil d'application de couple standard.
